**Europäisches Patentamt**

**European Patent Office**

**Office européen des brevets**

(11) Publication number: **0 096 147**
**B1**

## (12) EUROPEAN PATENT SPECIFICATION

(45) Date of publication of patent specification: **02.09.87**

(21) Application number: **82850128.8**

(22) Date of filing: **10.06.82**

(51) Int. Cl.⁴: **B 23 B 51/00,** B 23 C 5/10

(54) **Cutting tool and cutting insert therefor.**

(43) Date of publication of application:
**21.12.83 Bulletin 83/51**

(45) Publication of the grant of the patent:
**02.09.87 Bulletin 87/36**

(84) Designated Contracting States:
**DE FR GB IT SE**

(56) References cited:
**EP-A-0 042 120**
**DE-A-2 843 433**
**FR-A-2 317 989**
**GB-A-2 082 102**
**US-A-4 047 826**

(73) Proprietor: **SECO TOOLS AB**
**Fack**
**S-773 01 Fagersta (SE)**

(72) Inventor: **Greiff, Alfred**
**Dalavägen 55 B**
**S-773 00 Fagersta (SE)**

(74) Representative: **Eriksson, Kjell et al**
**Sandvik AB Patent Department**
**S-811 81 Sandviken (SE)**

Courier Press, Leamington Spa, England.

## Description

The present invention relates to a cutting tool including an exchangeable indexable cutting insert, particularly an end-milling tool for milling grooves of substantially semicircular cross section by rotation about the axis of a tool shank said tool shank being provided at the forward end thereof with a slot which is adapted to receive the cutting insert. The cutting insert has a bore for receiving a clamping bolt which extends transversely through the front end of the tool shank, and which is adapted to clamp each side face of the cutting insert to the side walls of the slot. A supporting member provided in the slot comprises supporting means adapted to cooperate with corresponding contact means on the cutting insert. The invention also relates to a cutting insert particularly designed to be used in a cutting tool of this type.

A cutting tool of this prior art is disclosed in DE—A1—3022104. In this previously known tool rotation of the cutting insert around the clamping bolt is prevented by a protrusion on the supporting member which projects into a recess in the cutting insert.

A similar tool is disclosed in FR—A—2317989. In this tool, however, the clamping bolt does not necessarily extend transversely through the cutting insert but may be located axially rearwardly thereof.

The object of the present invention is to provide a cutting tool of the type disclosed in DE—A1—3022104, wherein rotation of the cutting insert is prevented in a simple and reliable manner merely by using the supporting surface means on the supporting member.

The above and other objects have been attained by giving the invention of the type described above the characterizing features stated in the claims following hereinafter.

The invention is described in detail in the following with reference to the accompanying drawings in which one embodiment is shown by way of example. It is to be understood that this embodiment is only illustrative of the invention and that various modifications thereof may be made within the scope of the claims.

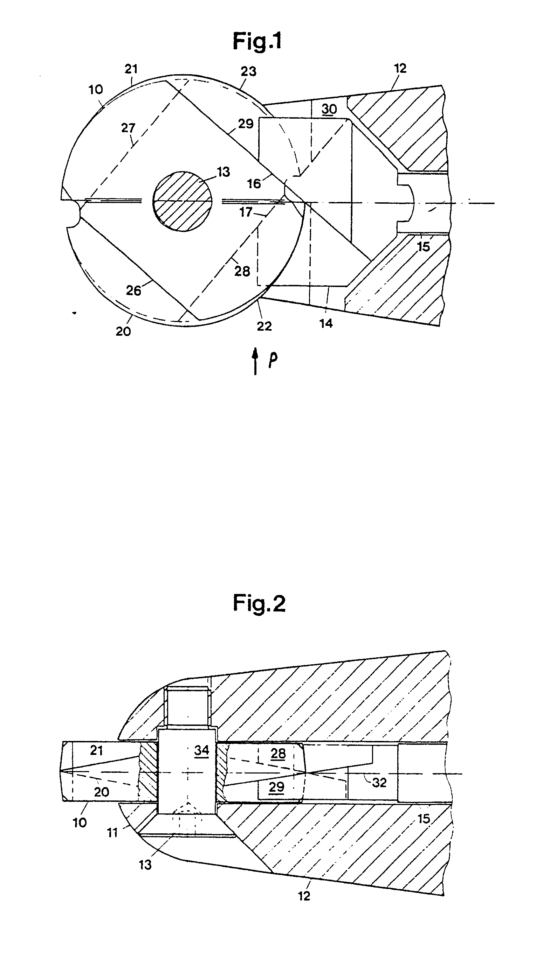

In the drawings, Fig. 1 shows a side view of the front end of the milling tool, partly in section.

Fig. 2 shows a sectional side view in the direction of the arrow P in Fig. 1.

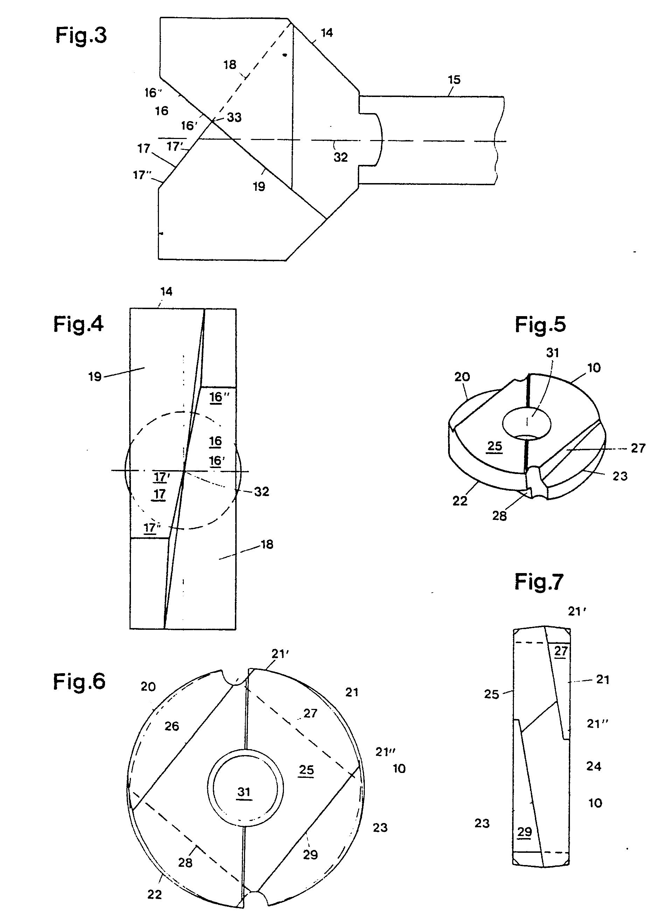

Fig. 3 shows a side view of the supporting member.

Fig. 4 shows a front view of the supporting member in Fig. 3.

Fig. 5 shows a perspective view of the cutting insert.

Fig. 6 shows a top view of the cutting insert in Fig. 5.

Fig. 7 shows a side view of the cutting insert in Fig. 6.

The cutting tool according to the invention comprises a tool shank 12 having a semispherical head 11. In the illustrated embodiment the cutting tool is an end-milling tool for milling grooves of substantially semicircular cross section. The head 11 is provided with a slot 30 which receives an indexable cutting insert 10. The cutting insert 10 is clamped to the side walls of the slot 30 by means of a clamping bolt 13 which extends through a bore 31 in the cutting insert 10.

In the tool shank 12 there is provided a supporting member comprising a head 14 and an axially extending rod 15. The head 14 is formed with two mutually inclined surfaces 18, 19; the outer portions thereof providing two supporting surfaces 16, 17 for supporting the cutting insert 10 over either of the two pairs of contact surfaces, 26, 27 and 28, 29, respectively, thereon. Generally, the supporting surfaces 16, 17 form a V-shaped recess therebetween, preferably with an included angle of 90°.

The cutting insert 10 is generally circular and comprises two pairs of cutting edges, 20, 21 and 22, 23, respectively. The cutting edges 20, 21, 22, 23 are curved in the axial direction of the tool shank 12. The side faces 24, 25 of the insert 10 are recessed adjacent to the cutting edges 20, 21, 22, 23 in such a way as to provide the contact surfaces 26, 27, 28, 29. Thus, the contact surfaces 26, 27, 28, 29 are distinct from the cutting edges 20, 21, 22, 23. The contact surface 27, which in the illustrated embodiment is planar, has a larger width at a rear portion 21' thereof than at a forward portion 21'' thereof. The remaining contact surfaces 26, 28, 29 have similar shape.

In similar manner the supporting surfaces 16, 17 which in the illustrated embodiment are planar, have larger widths at rear portions 16', 17' thereof than at forward portions 16'', 17'' thereof.

In the illustrated embodiment, the supporting surfaces 16, 17 intersect each other at a position 33 laterally spaced from the centre axis 32 of the tool shank 12.

In a preferred embodiment the radially inner ends of the rearmost portions 16', 17' extend to the centre axis 32 of the tool shank 12.

In a preferred embodiment the rod 15 is axially displaceable rearwards against spring action in a manner known per se as disclosed in for instance GB—A—2082102. The bolt 13 is provided with an eccentric portion 34 so that, when screwing the bolt 13 into the head 11, the eccentric portion 34 causes the insert 10 to move against the action of the spring.

It is to be understood that the above movement of the insert 10 might be produced in other ways, such as by providing the bolt 13 and the bore 31 in the insert with corresponding cam surfaces. Alternatively, the supporting member 14, 15 might be immovable.

## Claims

1. A cutting tool including an exchangeable indexable cutting insert (10), particularly an end-milling tool for milling grooves of substantially semicircular cross section by rotation about the axis of a tool shank (12) said tool shank being provided at the forward end thereof with a slot (30), said slot being adapted to receive the cutting insert (10), said cutting insert having a bore (31) adapted to receive a clamping bolt (13) which extends transversely through the front end (11) of the tool shank (12) and which is adapted to clamp each side face (24, 25) of the cutting insert (10) to the side walls of said slot, a supporting member (14) being contained in said slot, said supporting member comprising supporting means (16, 17) adapted to cooperate with corresponding contact means (26, 27; 28, 29) on the cutting insert (10), characterized in that the contact means comprise two alternative pairs of mutually inclined contact surfaces (26, 27; 28, 29) not themselves being surfaces of the cutting insert (10) which determine cutting edges (20, 21, 22, 23), each said pair of contact surfaces being formed by a pair of mutually inclined recesses in the side faces (24, 25) of the cutting insert, whereby said recesses have a depth greater at one extremity thereof than at the other, and in that the supporting means of said supporting member (14) comprise two mutually inclined supporting surfaces (16, 17) corresponding to said contact surfaces (26, 27; 28, 29) such that the width of each supporting surface at a rear portion (16', 17') of the supporting member where said supporting surface is furthest from the · cutting end of the tool, is greater than at a forward portion (16'', 17'') thereof.

2. A cutting tool according to claim 1, wherein the supporting surfaces (16, 17) are planar.

3. A cutting tool according to claim 2, wherein the supporting surfaces (16, 17) are disposed on opposite sides of the central plane of the slot (30).

4. A cutting tool according to claim 3, wherein the supporting member (14) within said slot (30) has side faces corresponding to side walls of the slot, and at the rearmost extremity of each supporting surface (16, 17) on the supporting member that portion of said surface furthest from the respective side face extends substantially to the axis (32) of the tool shank (12).

5. A cutting tool according to any of claims 1—4, wherein the continuations of the supporting surfaces (16, 17) to the central plane of the insert receiving slot (30) intersect each other at a point (33) laterally spaced from the centre axis (32) of the tool shank (12).

6. A cutting tool according to any of the preceding claims, wherein the supporting member (14) is spring-biased.

7. A cutting tool according to claim 6, wherein the clamping bolt (13) comprises means (34) for forcing the cutting insert (10) and the supporting member (14) rearwards against spring-action upon rotation thereof.

8. An indexable cutting insert for use as an exchangeable insert (10) in a cutting tool according to claim 1, comprising two pairs of curvilinear cutting edges (20, 21; 22, 23) and contact means (26, 27; 28, 29) adapted to ccoperate with corresponding supporting means (16, 17) on the cutting tool (12), characterized in that the contact means comprise two pairs of respectively two mutually inclined recesses, each recess defining a preferably planar contact surface (26, 27; 28, 29), distinct from the cutting surfaces, and each contact surface having a width determined by the depth of the corresponding recess, said width being greater at a rear portion (21') with respect to the corresponding cutting edges than at a forward portion (21'') of the recess.

9. A cutting insert according to claim 8, wherein the contact means comprise two pairs of contact surfaces (26, 27; 28, 29), each pair comprising two mutually inclined planar surfaces disposed with respect to the plane of the cutting insert on opposite sides of the cutting insert (10).

10. A cutting insert according to claim 8, wherein the cutting edges (20, 21, 22, 23) are generally circular arc-shaped.

## Patentansprüche

1. Schneidwerkzeug mit einer austauschbaren Wendeschneidplatte (10), insbesondere ein Endfräswerkzeug zum Fräsen von Nuten mit im wesentlichen halbkreisförmigem Querschnitt durch Drehen um die Achse eines Werkzeugschaftes (12), der an seinem vorderen Ende mit einem Schlitz (30) versehen ist, welcher so ausgebildet ist, daß er den Schneideinsatz (10) aufnimmt, welcher eine Bohrung (31) geeignet derart ausgestaltet aufweist, daß ein Klemmbolzen (13) afugenommen wird, der sich quer durch das Vorderende (11) des Werkzeugschaftes (12) erstreckt und geeingnet derart ausgestaltet ist, um jede Seitenfläche (24, 25) des Schneideinsatzes (10) an die Seitenwände des Schlitzes zu klemmen, wobei ein Stützteil (14) in dem Schlitz enthalten ist und Stützmittel (16, 17) geeingnet derart ausgestaltet aufweist, um mit entsprechenden Berührungsmitteln (26, 27; 28, 29) auf dem Schneideinsatz (10) zusammenzuwirken, dadurch gekennzeichnet, daß die Berührungsmittel zwei alternative Paare von gegenseitig geneigten Berührungsoberfläche (26, 27; 28, 29) aufweisen, die selbst nicht Oberflächen des Schneideinsatzes (10) sind, welche Schneidkanten (20, 21, 22, 23) bilden, wobei jedes Paar der Kontaktoberflächen durch ein Paar von gegenseitig geneigten Ausnehmungen in den Seitenflächen (24, 25) des Schneideinsatzes gebildet ist, wodurch die Ausnehmungen eine Tiefe haben, die an ihrem einen Ende größer als am anderen Ende ist, und daß die Stützmittel des Stützteils (14) zwei gegenseitig geneigte Stützoberflächen (16, 17) aufweisen, welche den Berührungsoberflächen (26, 27; 28, 29) derart entsprechen, daß die Breite jeder Stützoberfläche am rückwärtigen Teil (16', 17') des Stützteils, wo die Stützoberfläche am weitesten vom Schneidende des Werkzeuges entfernt ist, größer als an einem vorderen Teil (16'', 17'') des selben ist.

2. Schneidwerkzeug nach Anspruch 1, wobei die Stützoberflächen (16, 17) eben sind.

3. Schneidwerkzeug nach Anspruch 2, wobei die Stützoberflächen (16, 17) auf gegenüberliegenden Seiten der Mittelebene des Schlitzes (30) angeordnet sind.

4. Schneidwerkzeug nach Anspruch 3, wobei das Stützteil (14) innerhalb des Schlitzes (30) Seitenflächen hat, welche Seitenwänden des Schlitzes entsprechen, und am rückwärtigen Ende jeder Stützoberfläche (16, 17) auf dem Stützteil jenes Teil der Oberfläche, welches von der entsprechenden Seitenflächen am weitesten fort ist, sich im wesentlichen zur Achse (32) des Werkzeugschaftes (12) erstreckt.

5. Schneidwerkzeug nach einem der Ansprüche 1 bis 4, wobei sich in den Fortsetzungen der Stützoberflächen (16, 17) zur Mittelbene des Einsatzes Aufnahmeschlitze (30) einander an einer Stelle (33) schneiden, die von der Mittelachse (32) des Werkzeugschaftes (12) seitlich im Abstand angeordnet ist.

6. Schneidwerkzeug nach einem der vorhergehende Ansprüche, wobei das Stützteil (14) federnd vorgespannt ist.

7. Schneidwerkzeug nach Anspruch 6, wobei der Klemmbolzen (13) Mittel (34) aufweist, um den Schneideinsatz (10) und das Stützteil (14) gegen die Federkraft auf deren Drehung hin nach rückwärts drückt.

8. Wendeschneidplatte für die Benutzung als austauschbarer Einsatz (10) in einem Schneidwerkzeug nach Anspruch 1, mit zwei Paaren von krummlinigen Schneidkanten (20, 21; 22, 23) und Berührungsmitteln (26, 27; 28, 29), die geeignet ausgestaltet sind, um mit entsprechenden Stützmitteln (16, 17) auf dem Schneidwerkzeug (12) zusammenzuwirken, dadurch gekennzeichnet, daß die Berührungsmittel zwei Paare von jeweils zwei gegenseitig geneigten Ausnehmungen aufweisen, wobei jede Ausnehmung eine vorzugsweise ebene Berührungsoberfläche (26, 27; 28, 29) bildet die sich von den Schneidoberflächen unterscheidet, und daß jede Berührungsoberfläche eine Breite hat, welche durch die Tiefe der entsprechenden Ausnehmung bestimmt ist und an einem rückwärtigen Teil (21') bezüglich der entsprechenden Schneidkanten größer ist als an einem vorderen Teil (21'') der Ausnehmung.

9. Schneideinsatz nach Anspruch 8, wobei die Berührungsmittel zwei Paare von Berührungsoberflächen (26, 27; 28, 29) aufweisen, wobei jedes Paar zwei gegenseitig geneigte ebene Oberflächen aufweist, die bezüglich der Ebene des Schneideinsatzes auf gegenüberliegenden Seiten des Schneideinsatzes (10) angeordnet sind.

10. Schneideinsatz nach Anspruch 8, wobei die Schneidkanten (20, 21, 22, 23) im allgemeinen kreisbogenförmig sind.

## Revendications

1. Un outil de coupe comportant une plaquette de coupe indexable échangeable (10), en particulier un outil de fraisage en bout pour fraiser des gorges de section droite sensiblement semi-circulaire par rotation autour de l'axe d'une queue d'outil (12), ladite queue d'outil comportant à son extrémité avant une rainure (30), ladite rainure étant agencée pour recevoir la plaquette de coupe (10), ladite plaquette de coupe présentant un alésage (31) agencé pour recevoir un boulon de serrage (13) qui s'étend transversalement à travers l'extrémité avant (11) de la queue d'outil (12) et qui est agencé pour serrer chaque face latérale (24, 25) de la plaquette de coupe (10) sur les parois latérales de ladite rainure, un élément de support (14) étant contenu dans ladite rainure, ledit élément de support comportant des moyens de support (16, 17) agencés pour coopérer avec des moyens correspondants de contact (26, 27; 28, 29) de la plaquette de coupe (10), caractérisé en ce que les moyens de contact comportent deux paires alternatives de surfaces de contact mutuellement inclinées (26, 27; 28, 29) qui ne sont pas elles-mêmes des surfaces de la plaquette de coupe (10) déterminant les arêtes de coupe (20, 21, 22, 23), chacune desdites paires de surfaces de contact étant formée par une paire de cavités mutuellement inclinées ménagées dans les faces latérales (24, 25) de la plaquette de coupe, de sorte que lesdites cavités présentent une profondeur qui est plus grande à une extrémité au'à l'autre, et en ce que les moyens de support dudit élément de support (14) comportent deux surfaces de support mutuellement inclinées (16, 17) correspondant auxdites surfaces de contact (26, 27; 28, 29) de manière que la largeur de chaque surface de support, à une partie arrière (16', 17') de l'élément de support, où ladite surface de support est la plus éloignée de l'extrémité de coupe de l'outil, est plus grande qu'à une partie avant (16'', 17'') de ladite surface de support.

2. Un outil de coupe selon la revendication 1, dans lequel lesdites surfaces de support (16, 17) sont planes.

3. Un outil de coupe selon la revendication 2, dans lequel les surfaces de support (16, 17) sont disposées de part et d'autre du plan central de la rainure (30).

4. Un outil de coupe selon la revendication 3, dans lequel l'élément de support (14) dans ladite rainure (30) présente des faces latérales correspondant aux parois latérales de la rainure et, à l'extrémité la plus arrière de chaque surface de support (16, 17) de l'élément de support, la partie de ladite surface qui est la plus éloignée de la face latérale respective s'étend sensiblement suivant l'axe (32) de la queue d'outil (12).

5. Un outil de coupe selon l'une des revendciations 1 à 4, dans lequel les prolongements des surfaces de support (16, 17) jusqu'au plan central de la rainure (30) de réception de la plaquette se coupent en un point (33) latéralement espacé de l'axe central (32) de la queue d'outil (12).

6. Un outil de coupe selon l'une quelconque des revendications précédentes, dans lequel l'élément de support (14) est rappelé par ressort.

7. Un outil de coupe selon la revendication 6, dans lequel le boulon de serrage (13) comporte des moyens (34) pour forcer la plaquette de coupe (10) et l'élément de support (14) vers l'arrière contre l'action de ressort lors de la rotation dudit boulon de serrage.

8. Une plaquette de coupe indexable à utiliser comme plaquette échangeable (10) dans un outil de coupe selon la revendication 1, comportant deux paires d'arêtes de coupe curvilignes (20, 21; 22, 23) et des moyens de contact (26, 27; 28, 29) agencés pour coopérer avec les moyens correspondants de support (16, 17) de l'outil de coupe (12), caractérisée en ce que les moyens de contact comportent deux paires de cavités mutuellement inclinées, chaque cavité définissant une surface de contact (26, 27; 28, 29), de préférence plane, distincte des surfaces de coupe, et chaque surface de contact présentant une largeur déterminée par la profondeur de la cavité correspondante, ladite largeur étant plus grande à une partie arrière (21') par rapport aux arêtes de coupe correspondantes, qu'à une partie avant (21'') de la cavité.

9. Une plaquette de coupe selon la revendication 8, dans laquelle les moyens de contact comportent deux paires de surfaces de contact (26, 27; 28, 29), chaque paire comportant deux surfaces planes mutuellement inclinées disposées, par rapport au plan de la plaquette de coupe, de part et d'autre de la plaquette de coupe (10).

10. Une plaquette de coupe selon la revendication 8, dans laquelle les arêtes de coupe (20, 21, 22, 23) sont de forme généralement en arc de cercle.

0 096 147

# Fig.1

# Fig.2

1

Fig.3

14

18

16"

16

16'    33

17    17'

17"    17"

19

32

15

Fig.4

14

19

16"

16

16'

17'

17

17"

32

18

Fig.5

31

20    10

25    27

22    23

28

Fig.7

21'

27

25    21

21"

24

10

23    29

Fig.6

20    21'

26    21

27

28    25    21"

31    10

23

22    29

2